# EUROPEAN PATENT SPECIFICATION

(11) **EP 3 303 181 B1**
(45) Date of publication and mention of the grant of the patent: **20.01.2021**
(21) Application number: 16730590.3
(22) Date of filing: 01.06.2016
(51) Int. Cl.: B65D 81/30, C08K 9/06, C08K 9/08, C08L 23/06, B65D 85/80, B65D 85/72

(54) **LIGHT PROTECTIVE BOTTLE DESIGN**
LICHTSCHUTZFLASCHENDESIGN
DESIGN DE BOUTEILLE PROTÉGÉE CONTRE LA LUMIÈRE

(30) Priority: 04.06.2015 US 201562170816 P
(43) Date of publication of application: 11.04.2018
(73) Proprietor: The Chemours Company FC, LLC, Wilmington, DE 19899 (US)
(72) Inventor: STANCIK, Cheryl, Marie, Kennett Square, PA 19348 (US); NIEDENZU, Philipp, Martin, Wilmington, DE 19808 (US); CONNOLLY, J., Don, Jr., Wilmington, DE 19809 (US)
(74) Representative: Heinemann, Monica
(86) International application number: PCT/US2016/035128
(87) International publication number: WO 2016/196529

(56) References cited:
- EP-A1- 0 475 110
- US-A1- 2004 195 141
- US-A1- 2005 239 921
- US-A1- 2007 063 394
- US-A1- 2015 064 068

## Description

### Background of the Invention

Certain compounds and nutrients contained within packages can be negatively impacted by exposure to light. Many different chemical and physical changes may be made to molecular species as a result of either a direct, or indirect, exposure to light, which can collectively be defined as photochemical processes. As described in Atkins, photochemical processes can include primary absorption, physical processes (e.g., fluorescence, collision-induced emission, stimulated emission, intersystem crossing, phosphorescence, internal conversion, singlet electronic energy transfer, energy pooling, triplet electronic energy transfer, triplet-triplet absorption), ionization (e.g., Penning ionization, dissociative ionization, collisional ionization, associative ionization), or chemical processes (e.g., disassociation or degradation, addition or insertion, abstraction or fragmentation, isomerization, dissociative excitation) (Atkins, P.W.; Table 26.1 Photochemical Processes. Physical Chemistry, 5th Edition; Freeman: New York, 1994; 908.). As one example, light can cause excitation of photosensitizer species (e.g., riboflavin in dairy food products) that can then subsequently react with other species present (e.g., oxygen, lipids) to induce changes, including degradation of valuable products (e.g., nutrients in food products) and evolution of species that can adjust the quality of the product (e.g., off-odors in food products).

As such, there is a need to provide packaging with sufficient light protection properties to allow the protection of the package content(s). The ability of packages to protect substances they contain is highly dependent on the materials used to design and construct the package (reference: Food Packaging and Preservation; edited M. Mathlouthi, ISBN: 0-8342-1349-4; Aspen publication; Copyright 1994; Plastic Packaging Materials for Food; Barrier Function, Mass Transport, Quality Assurance and Legislation: ISBN 3-527-28868-6; edited by O.G Piringer; A.L. Baner; Wiley-vch Verlag GmBH, 2000, Preferred packaging materials minimize the penetration of moisture, light, and oxygen often referred to as barrier characteristics.

Light barrier characteristics of materials used for packaging are desired to provide light protection to package contents. Methods have been described to measure light protection of a packaging material and characterize this protection with a "Light Protection Factor" or (LPF) as described in published patent application US21050093832-A1.

Titanium dioxide (TiO2) is frequently used in plastics food packaging layer(s) at low levels (typical levels of 0.1 wt% to 5 wt% of a composition) to provide aesthetic qualities to a food package such as whiteness and/or opacity. In addition to these qualities, titanium dioxide is recognized as a material that may provide light protection of certain entities as described in US 5,750,226; US 6,465,062; and US20040195141; however, the use of TiO2 as a light protection material in plastic packages has been limited due to challenges to process titanium dioxide compositions at high loading levels or levels high enough to provide the desired light protection.

Useful packaging designs are those that provide the required light protection and functional performance at a reasonable cost for the target application. The cost of a packaging design is in part determined by the materials of construction and the processing required to create the packaging design.

Dairy milk packaging is an application where there is a requirement for light protection in packages to protect dairy milk from the negative impacts of light exposure. Light exposure to dairy milk may result in the degradation of some chemical species in the milk; this degradation results in a decrease in the nutrient levels and sensory quality of the milk (e.g., "Riboflavin Photosensitized Singlet Oxygen Oxidation of Vitamin D", J. M. King and D. B. Min, V 63, No. 1, 1998, Journal of Food Science, page 31). Hence protection of dairy milk from light with light protection packaging will allow the nutrient levels and sensory quality to be preserved at their initial levels for extended periods of time as compared to milk packaged in typical packaging that does not have light protection (e.g., "Effect of Package Light Transmittance on Vitamin Content of Milk. Part 2: UHT Whole Milk." A. Saffert, G. Pieper, J. Jetten; Packaging Technology and Science, 2008; 21: 47-55).

Different additives, effects and/or pigments have been provided in packaging designs to provide light protection and may be used with or without TiO2. The use of yellow pigment is practiced as a light protection agent in a rigid dairy package design (e.g., Mayfield Dairy, Athens TN, http://www.mayfielddairy.com/). When a yellow effect is desired in a package, this design can provide a useful light protection packaging solution; however, if the yellow package appearance is not desired, this light protection solution is not useful as a single layer design. Likewise, carbon black is a pigment that is used as a light protection agent in packages. It imparts a gray tone to a packages, even at low levels, which can provide an undesirable appearance for some package applications. Thus, the use of color and black pigments can provide light protection but can be limiting to the package aesthetics.

The use of mica (US 20040195141) with TiO2 as a light protection composition has been reported at lower loading levels, but higher loadings were not demonstrated nor was the light protection benefit of the design quantified. In section [0030] the limitations were stated on the use of higher loadings of light protection agents and negative impacts on the mechanical properties of the resultant containers were disclosed [0032]. Thus the use of other inorganic particles at high loadings to demonstrate simultaneous light protection and mechanical properties has not been shown in the art.

Additionally, multilayered structures are seen as a means to achieve light protection qualities in package designs. Typically, more than one layer of material is required for adequate protection of food from light and mechanical damage. For example, Cook et al. (US 6,465,062) present a multilayer packaging container design to achieve light barrier characteristics with other functional barrier layers. Problems associate with multilayered packaging structures are they require more complex processing, additional materials for each layer, higher package cost, and risk delamination of layers. Deficiencies of multilayer designs and benefits of monolayer designs are discussed in US 20040195141 in section [0022] and [0026]. Thus, there is a commercial need to create a monolayer food package that achieves, or exceeds, the light protection and mechanical strength properties of a multilayer package.

US 2007/063394 A1 describes opaque bottles suited for storing and shielding products as milk away from the adverse effects of visible and UV radiation.

Challenges to achieving light protection in a monolayer packaging design include resultant designs are thick, provide poor mechanical strength, and/or they are hard to manufacture. For example, Macauley et al. (US 5,750,226, column 3, row 49) reported that package layers having high inorganic particle content could not be extruded. In addition, the design presented in Macauley et al is 29 mil (736.6 µm) in thickness. While the thickness of this design may be tolerated for the given application and performance needs, it is quite thick compared to typical package thickness for some applications. For example, the traditional 1 gallon (3.79 I) jug used by the dairy industry in the US comprised of HDPE (high density polyethylene) typically has a thickness between about 15 (381 µm) and 25 mil (635 µm). There is a trend towards light weighting for packages for both cost and materials savings, so it is preferred to have a

As discussed in US 5,833,115, one gallon and other size plastic containers are widely used for the packaging milk and other liquids. One of the significant costs in the production of such containers is the amount of design that does not rely on many layers necessarily resulting in a thicker package wall.

As discussed in US 5,833,115, one gallon and other size plastic containers are widely used for the packaging milk and other liquids. One of the significant costs in the production of such containers is the amount of resin required to produce the bottle or jug. Manufacturers attempt to reduce the cost of containers by reducing the amount of resin used to make each one. Even a small reduction in resin content results in significant savings when many thousands of containers are produced. However, when the resin content is reduced past a certain point, it is difficult to provide the strength in the corners and walls of the containers that is necessary to result in a stable container and which will retain an attractive appearance. More specifically, when containers become unstable, the result is bulging or sagging of the container walls. Also, unstable containers often have characteristics that cause dimpling at the corners of the containers during filling or pouring. To overcome these problems, various design modifications have been proposed to stabilize plastic containers. One such example is shown in US 3,708,082 to Platte which discloses a plastic container having walls designed to minimize deformation during filling and storage. While it is possible to overcome design challenges to allow for reduced resin use in packages, redesign of a bottle shape is costly as the systems and processes used to manufacture and process the bottles may need to be reconfigured with such changes. In addition, the shape or form of a package may be important to its brand image or function to the end use consumer. This demonstrates that it is desirable for a redesigned bottle with improved functionality (e.g., enhanced light protection) to be produced from a mold that is substantially similar to its predecessor. Thus, when light protection enhancement is desired for a package design, it is generally preferable to provide improved light protection while minimizing other changes to the package design, like the package size and shape.

### Summary of the Invention

Surprisingly a new light protective package was discovered comprising a monolayer, the monolayer comprising treated TiO₂ particles at high concentration levels of 6 wt% or higher of the monolayer, more preferably 7wt% or higher of the monolayer, even more preferably 8 wt. % or higher of the monolayer, preferably without additional fillers, such as CaCO3, wherein the monolayer protects the food within the package from both light and physical damage. The monolayer of the present invention has superior light protection properties while maintaining mechanical properties. The monolayer has a light protection factor ("LPF") value of 25 or greater, preferably greater than 30, more preferably greater than 40 or even more preferably greater than 50. The treated titanium dioxide material can be dispersed and processed in package production processes by use of incorporation with a masterbatch, and preferably processed into a package using blow molding methods.

One embodiment of the present invention is a package for one or more light sensitive products comprising:
a) a monolayer comprising TiO₂ particles coated with a metal oxide and an organic material, and one or more melt processable resin(s), wherein the one or more melt processable resin(s) comprises at least one polyolefin and wherein the monolayer has an LPF value of from 25 to 120, and the concentration of TiO₂ particles is in the range of 6 to 14 wt.% of the monolayer; and
b) optionally one or more aesthetic layers, wherein the light protection factor (LPF) is measured as described herein in the first paragraph of the section titled "Measuring Light protection Performance or LPF".

In an aspect of the invention the TiO₂ particles are first coated with the metal oxide and then coated with the organic material. The monolayer protects the light sensitive product from mechanical damage and light. It is preferred that the metal oxide is selected from the group consisting of silica, alumina, zirconia, or combinations thereof. It is most preferred that the metal oxide is alumina. It is preferred that the organic coating material on the TiO₂ is selected from the group consisting of an organo-silane, an organo-siloxane, a fluoro-silane, an organo-phosphonate, an organo-acid phosphate, an organo-pyrophosphate, an organo-polyphosphate, an organo-metaphosphate, an organo-phosphinate, an organo-sulfonic compound, a hydrocarbon-based carboxylic acid, an associated ester of a hydrocarbon-based carboxylic acid, a derivative of a hydrocarbon-based carboxylic acid, a hydrocarbon-based amide, a low molecular weight hydrocarbon wax, a low molecular weight polyolefin, a co-polymer of a low molecular weight polyolefin, a hydrocarbon-based polyol, a derivative of a hydrocarbon-based polyol, an alkanolamine, a derivative of an alkanolamine, an organic dispersing agent, or a mixture thereof. It is more preferred that the organic material is an organo-silane having the formula: R⁵ ₓSiR⁶ ₄₋ₓ wherein R⁵ is a nonhydrolyzable alkyl, cycloalkyl, aryl, or aralkyl group having at least 1 to about 20 carbon atoms; R⁶ is a hydrolyzable alkoxy, halogen, acetoxy, or hydroxy group; and x=1 to 3. It is most preferred that the organic material is Octyltriethoxysilane. In an aspect of the invention the monolayer can have a concentration of TiO₂ particles of 7 to 14 wt% of the monolayer, preferably 8 to 14 wt.% of the monolayer, more preferably 9 to 14 wt.% of the monolayer, even more preferably 10 to 14 wt.% of the monolayer. The monolayer can have a LPF value of 25 to 120, more preferably 30 to 120, even more preferably 40 to 120, and even more preferably 50 to 120. The monolayer can have a whiteness in the range of 50 to 80. The melt processable resin(s) comprises polyolefins. In an aspect of the invention the melt processable resin is preferably a high density polyethylene and the monolayer has a thickness of 13 mil (330.2 µm) to 20 mil (508 µm). In a further aspect of the invention the metal oxide is alumina and the organic material is octyltriethoxysilane.

Another embodiment of the present invention includes a package design comprising:
a. a monolayer comprising: TiO₂ particles coated with a metal oxide and an organic material, and one or more melt processable resin(s), wherein the one or more of melt processable resin(s) is selected from the group of polyolefins and wherein the monolayer has an LPF value of 25 to 120, and the concentration of TiO₂ particles is from 6 to 14 wt.% of the monolayer, wherein the light protection factor (LPF) is measured as described herein in the first paragraph of the section titled "Measuring Light protection Performance or LPF"; and
b. optionally one or more aesthetic layers; wherein the monolayer is shaped to hold a volume of fluid from 0.5 gallons (1.89 I) to 2 gallons (7.57 I).

The metal oxide can be selected from the group consisting of silica, alumina, zirconia, or combinations thereof. The metal oxide is preferably alumina. The organic material is preferably selected from the group consisting of an organo-silane, an organo-siloxane, a fluoro-silane, an organo-phosphonate, an organo-acid phosphate, an organo-pyrophosphate, an organo-polyphosphate, an organo-metaphosphate, an organo-phosphinate, an organo-sulfonic compound, a hydrocarbon-based carboxylic acid, an associated ester of a hydrocarbon-based carboxylic acid, a derivative of a hydrocarbon-based carboxylic acid, a hydrocarbon-based amide, a low molecular weight hydrocarbon wax, a low molecular weight polyolefin, a co-polymer of a low molecular weight polyolefin, a hydrocarbon-based polyol, a derivative of a hydrocarbon-based polyol, an alkanolamine, a derivative of an alkanolamine, an organic dispersing agent, or a mixture thereof.

The organic material is preferably an organo-silane having the formula: R⁵ ₓSiR⁶ ₄₋ₓ wherein R⁵ is a nonhydrolyzable alkyl, cycloalkyl, aryl, or aralkyl group having at least 1 to about 20 carbon atoms; R⁶ is a hydrolyzable alkoxy, halogen, acetoxy, or hydroxy group; and x=1 to 3. The organic material is preferably octyltriethoxysilane.

The package can have a concentration of TiO₂ particles of 7 to 14 wt. % of the monolayer, preferably 8 to 14 wt. % of the monolayer, more preferably 9 to 14 wt. % of the monolayer, most preferably 10 to 14 wt. % of the monolayer. The monolayer can have a LPF value of 25 to 120, preferably 30 to 120, more preferably 40 to 120, and even more preferably 50 to 120. The monolayer can have a whiteness index of 80 to 100 WI E313 D65/20.

The one or more melt processable resin(s) is selected from the group of polyolefins, and is preferably a high density polyethylene. The monolayer can have a thickness of 254 µm (10 mil) to 762 µm (30 mil). The metal oxide can be alumina and the organic material can be octyltriethoxysilane. The monolayer can be shaped to hold a volume of 1 gallon (3.79 I) with a monolayer weight of 57 g to 63 g.

### DETAILED DESCRIPTION OF THE DISCLOSURE

essentially of" is intended to include examples encompassed by the term "consisting of."

In this disclosure, terms in the singular and the singular forms "a," "an," and "the," for example, includes plural references unless the content clearly dictates otherwise. Thus, for example, reference to "TiO₂ particle", "a TiO₂ particle", or "the TiO₂ particle" also includes a plurality of TiO₂ particles.

A TiO₂ particle can be coated with a metal oxide, preferable alumina, and then an additional organic layer. The treated TiO₂ of the present invention is an inorganic particulate material that can be uniformly dispersed throughout a polymer melt, and imparts color and opacity to the polymer melt. Reference to TiO₂ without specifying additional treatments or surface layers does not imply that it cannot have such layers.

The packages of the present invention preferably consist of a monolayer that may have, but is preferably substantially free of, or free of, fillers including CaCO₃, BaSO₄, silica, talc and/or clay.

Titanium dioxide (TiO₂) particles may be in the rutile or anatase crystalline form. It is commonly made by either a chloride process or a sulfate process. In the chloride process, TiCl₄ is oxidized to TiO₂ particles. In the sulfate process, sulfuric acid and ore containing titanium are dissolved, and the resulting solution goes through a series of precipitation steps to yield TiO₂. Both the sulfate and chloride processes are described in greater detail in "The Pigment Handbook", Vol. 1, 2nd Ed., John Wiley & Sons, NY (1988),

By "TiO₂ particle" it is meant that the particle has a medium size range of 100 nm to 250 nm as measured by X-Ray centrifuge technique, specifically utilizing a Brookhaven Industries model TF-3005W X-ray Centrifuge Particle Size Analyzer. The crystal phase of the TiO₂ is preferably rutile. The TiO₂ after receiving surface treatments will have a mean size distribution in diameter of about 100 nm to 400 nm, more preferably 100 nm to 250 nm. Nanoparticles (those have mean size distribution less than about 100 nm in their diameter) could also be used in this invention but may provide different light protection performance properties.

The TiO₂ particles of the present invention may be substantially pure, such as containing only titanium dioxide, or may be treated with other metal oxides, such as silica, alumina, and/or zirconia. TiO₂ particles coated/treated with alumina are preferred in the packages of the present invention. The TiO₂ particles may be treated with metal oxides, for example, by co-oxidizing or coprecipitating inorganic compounds with metal compounds. If a TiO₂ particle is co-oxidized or co-precipitated, then up to about 20 wt.% of the other metal oxide, more typically, 0.5 to 5 wt.%, most typically about 0.5 to about 1.5 wt.% may be present, based on the total particle weight.

The treated titanium dioxide can comprise: (a) providing titanium dioxide particles having on the surface of said particles a substantially encapsulating layer comprising a pyrogenically-deposited metal oxide or precipitated inorganic oxides; (b) treating said particles with at least one organic surface treatment material selected from an organo-silane, an organo-siloxane, a fluoro-silane, an organo-phosphonate, an organo-acid phosphate, an organo-pyrophosphate, an organo-polyphosphate, an organo-metaphosphate, an organo-phosphinate, an organo-sulfonic compound, a hydrocarbon-based carboxylic acid, an associated ester of a hydrocarbon-based carboxylic acid, a derivative of a hydrocarbon-based carboxylic acid, a hydrocarbon-based amide, a low molecular weight hydrocarbon wax, a low molecular weight polyolefin, a co-polymer of a low molecular weight polyolefin, a hydrocarbon-based polyol, a derivative of a hydrocarbon-based polyol, an alkanolamine, a derivative of an alkanolamine, an organic dispersing agent, or a mixture thereof; and (c) optionally, repeating step (b).

An example of a method of treating or coating particles of the present invention with amorphous alumina is taught in Example 1 of U.S. Patent 4,460,655. In this process, fluoride ion, typically present at levels that range from about 0.05 wt.% to 2 wt.% (total particle basis), is used to disrupt the crystallinity of the alumina, typically present at levels that range from about 1 wt.% to about 8 wt.% (total particle basis), as the latter is being deposited onto the titanium dioxide particles. Note that other ions that possess an affinity for alumina such as, for example, citrate, phosphate or sulfate can be substituted in comparable amounts, either individually or in combination, for the fluoride ion in this process. The performance properties of white pigments comprising TiO₂ particles coated with alumina or alumina-silica having fluoride compound or fluoride ions associated with them are enhanced when the coated TiO₂ is treated with an organosilicon compound. The resulting compositions are particularly useful in plastics applications. Further methods of treating or coating particles of the present invention are disclosed, for example, in US 5,562,990 and US 2005/0239921,

Packaging compositions or articles of the present invention typically include treated TiO₂ at about 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9 wt. % to 12 wt. % (based on the total weight of the monolayer).

Titanium dioxide particles used in the present invention may be treated with an organic compound such as low molecular weight polyols, organosiloxanes, organosilanes, alkylcarboxylic acids, alkylsulfonates, organophosphates, organophosphonates and mixtures thereof. The preferred organic compound is selected from the group consisting of low molecular weight polyols, organosiloxanes, organosilanes and organophosphonates and mixtures thereof and the organic compound is present at a loading of between 0.20 wt. % and 2.00 wt. %, 0.30 wt. % and 1.00 wt. %, or 0.70 wt. % and 1.30 wt. % on a total particle basis. The organic compound can be in the range of about 0.1 to about 25 wt %, or 0.1 to about 10 wt %, or about 0.3 to about 5 wt %, or about 0.7 to about 2 wt. One of the preferred organic compounds used in the present invention is polydimethyl siloxane; other preferred organic compounds used in the present invention include carboxylic acid containing material, a polyalcohol, an amide, an amine, a silicon compound, another metal oxide, or combinations of two or more thereof.

In a preferred embodiment, the at least one organic surface treatment materials is an organo-silane having the formula: R⁵ ₓSiR⁶ ₄₋ₓ wherein R⁵ is a nonhydrolyzable alkyl, cycloalkyl, aryl, or aralkyl group having at least 1 to about 20 carbon atoms; R⁶ is a hydrolyzable alkoxy, halogen, acetoxy, or hydroxy group; and x=1 to 3. Octyltriethoxysilane is a preferred organo-silane.

Packages of the present invention may contain other inorganic materials, such as non-titania of the compositions, any elemental halide, oxide, hydroxide, oxy-hydroxide and/or combinations thereof. The preferred elements are Si, Al, P, B, Zr, Zn, Ca, Mg, S, C or N.

When the TiO₂ particles of the present invention are used in a polymer composition/melt, the melt-processable polymer that can be employed together with the TiO₂ particles of this invention comprises a high molecular weight polymer, preferably thermoplastic resin. By "high molecular weight" it is meant to describe polymers having a melt index value of 0.01 to 50, typically from 2 to 10 as measured by ASTM method D1238-98. By "melt-processable," it is meant a polymer must be melted (or be in a molten state) before it can be extruded or otherwise converted into shaped articles, including films and objects having from one to three dimensions. Also, it is meant that a polymer can be repeatedly manipulated in a processing step that involves obtaining the polymer in the molten state. Polymers that are suitable for use in this invention include, by way of example but not limited thereto, polymers of ethylenically unsaturated monomers including olefins such as polyethylene, polypropylene, polybutylene, and copolymers of ethylene with higher olefins such as alpha olefins containing 4 to 10 carbon atoms or vinyl acetate; vinyls such as polyvinyl chloride, polyvinyl esters such as polyvinyl acetate, polystyrene, acrylic homopolymers and copolymers; phenolics; alkyds; amino resins; polyamides; phenoxy resins, polysulfones; polycarbonates; polyesters and chlorinated polyesters; polyethers; acetal resins; polyimides; and polyoxyethylenes. Mixtures of polymers are also contemplated. Polymers suitable for use in the present invention also include various rubbers and/or elastomers, either natural or synthetic polymers based on copolymerization, grafting, or physical blending of various diene monomers with the above-mentioned polymers, all as generally known in the art. Typically, the polymer may be selected from the group consisting of polyolefin, polyvinyl chloride, polyamide and polyester, and mixture of these. More typically used polymers are polyolefins. Most typically used polymers are polyolefins selected from the group consisting of polyethylene, polypropylene, and mixture thereof. A typical polyethylene polymer is low density polyethylene, linear low density polyethylene, and high density polyethylene (HDPE).

A wide variety of additives may be present in the packaging composition of this invention as necessary, desirable, or conventional. Such additives include polymer processing aids such as fluoropolymers, fluoroelastomers, etc., catalysts, initiators, antioxidants (e.g., hindered phenol such as butylated hydroxytoluene), blowing agent, ultraviolet light stabilizers (e.g., hindered amine light stabilizers or "HALS"), organic pigments including tinctorial pigments, plasticizers, antiblocking agents (e.g. clay, talc, calcium carbonate, silica, silicone oil, and the like) leveling agents, flame retardants, anti-cratering additives, and the like. Additional additives further include plasticizers, optical brighteners, adhesion promoters, stabilizers (e.g., hydrolytic stabilizers, radiation stabilizers, thermal stabilizers, and ultraviolet (UV) light stabilizers), antioxidants, ultraviolet ray absorbers, anti-static agents, colorants, dyes or pigments, delustrants, fillers, fire-retardants, lubricants, reinforcing agents (e.g., glass fiber and flakes), processing aids, anti-slip agents, slip agents (e.g., talc, anti-block agents), and other additives.

Any melt compounding techniques known to those skilled in the art may be used to process the compositions of the present invention. Packages of the present invention may be made after the formation of a masterbatch. The term masterbatch is used herein to describe a mixture of inorganic particles and/or fillers (including TiO₂ particles) (collectively called solids), melt processed at high solids to resin loadings (generally 50 - 70 wt% by weight of the total masterbatch) in high shear compounding machinery such as Banbury mixers, continuous mixers or twin screw mixers, which are capable of providing enough shear to fully incorporate and disperse the solids into the melt processable resin. The resultant melt processable resin product highly loaded with solids is termed a masterbatch, and is typically subsequently diluted or "letdown" by incorporation of additional virgin melt processable resin in plastic production processes. The letdown procedure is accomplished in the desired processing machinery utilized to make the final consumer article, whether it is sheet, film, bottle, package or another shape. The amount of virgin resin utilized and the final solids content is determined by the use specifications of the final consumer article. The masterbatch composition of this invention is useful in the production of shaped articles.

In another embodiment of the present invention, the treated titanium dioxide is supplied for processing into the package as a masterbatch concentrate. Preferred masterbatch concentrates typically have titanium dioxide content of greater than 40 wt%, greater than 50 wt%, greater than 60 wt%, or greater than 70 wt%; the most preferred is 50%.

In an aspect of the invention, the article produced from the composition or masterbatch of this invention may be a film, package, or container and may have a sheet or wall thickness of 5 mil (127 µm) to 100 mil (2.54 mm), preferably 10-40 mil (254-1016 µm), and most preferably 13-30 mil (330.2 µm-762 µm). The amount of inorganic solids present in the particle-containing polymer composition and package will vary depending on the end use application.

The amount of treated titanium dioxide particles in an end use, such as a plastic package, polymer film, container, or bottle, can range from about 0.01 to about 20 wt.%, and is preferably from about 0.1 to about 15 wt.%, more preferably 5 to 10 wt.%. Treated TiO₂ can be in an end use at about 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9 wt. % to 12 wt. % (based on the total weight of the monolayer).

A package is typically produced by melt blending the masterbatch containing the treated titanium dioxide with a second high molecular weight melt-processable polymer to produce the desired composition used to form the finished article of manufacture. The masterbatch composition and second high molecular weight polymer are melt blended, using any means known in the art, as disclosed above in desired ratios to produce the desired composition of the final article or package. In this process, twin-screw extruders are commonly used. Co-rotating twin-screw extruders are available from Werner and Pfleiderer. The resultant melt blended polymer is extruded or otherwise processed to form a package, sheet, or other shaped article of the desired composition.

The shaped article, or package, may have one or more additional aesthetic layers. Such layer or layers may be formed from a label, paper, printed ink, wrap, or other material. The layer or layers may cover part or all of the surface of the package. The aesthetic layer or layers may be on the internal walls of the package. The aesthetic layer or layers may contribute some light protection performance to the package, but the primary light protection monolayer disclosed above provides substantially more light protection than the light protection provided by the aesthetic layer or layers.

The shaped article, or package, may have one or more additional functional layer or layers. Such layer or layers may be formed from a label, paper, printed ink, wrap, coating treatment or other material. The layer or layers may cover part or all of the surface of the package. The functional layer or layers may be on the internal walls of the package. The functional layer or layers may contribute some light protection performance to the package, but the primary light protection monolayer disclosed above provides substantially more light protection than the light protection provided by the functional layer or layers.

Layers applied for aesthetics of other functional purposes, including for branding and product information like nutrition and ingredient labels, may not be complete layers. For example, labels may only cover a small area on the surface area of a package or a wrap may cover the sides of a package, but not the base. Such incomplete layers cannot provide fully effective light protection as light can enter the package through the surfaces of the package that are not covered by the layer. As light can enter the package from any direction, having complete coverage of the package is an important consideration in the package light protection design. Hence, aesthetic layers are often deficient in providing the primary mode of light protection for a package design. Functional layers typically have a narrowly defined purpose, such as providing gas barrier properties or to prevent interactions of layers or to bind two layers together and thus are not designed for light protection. The present invention addresses this challenge by providing and designing light protection directly into the primary package thus imparting light protection to substantially all of the package surface.

Layers applied for specific functionalities beyond light protection, including gas barrier layers or layers acting as a liner or barrier to prevent interaction of the product with primary package may provide some light protection, but are insufficient to contribute substantially to the light protection needs of the package.

The packages of the present invention are preferably made by blow molding. In an additional embodiment, extrusion blow molding is used to produce the package. In yet another embodiment, a pre-form can be used to produce the package using a blow molding process.

### GENERAL STEPS OF BLOW MOLDING

Blow molding is a molding process in which air pressure is used to inflate soft plastic into a mold cavity. Blow molding techniques have been disclosed in the art, for example in "Petrothene® Polyolefins ... a processing guide", 5th Edition, 1986, U.S.I Chemicals. Blow molding is an important industrial process for making one-piece hollow plastic parts with thin walls, such as bottles and similar containers. Blow molding is accomplished in two stages: (1) fabrication of a starting tube of molten plastic, called a parison; and (2) inflation of the tube to the desired final shape. Forming the parison is accomplished by either of two processes: extrusion or injection molding.

Extrusion blow molding contains four steps: (1) extrusion of parison; (2) parison is pinched at the top and sealed at the bottom around a metal blow pin as the two halves of the mold come together; (3) the tube is inflated so that it takes the shape of the mold cavity; and (4) mold is opened to remove the solidified part.

Injection blow molding contains the same steps as blow molding; however, the starting parison is injection molded rather than extruded: (1) parison is injection molded around a blowing rod; (2) injection mold is opened and parison is transferred to a blow mold; (3) soft polymer is inflated to conform to a blow mold; and (4) blow mold is opened and blown product is removed.

Blow molding is limited to thermoplastics. Polyethylene is the polymer most commonly used for blow molding; in particular, high density and high molecular weight polyethylene (HDPE and HMWPE). In comparing their properties with those of low density PE given the requirement for stiffness in the final product, it is more economical to use these more expensive materials because the container walls can be made thinner. Other blow moldings are made of polypropylene (PP), polyvinylchloride (PVC), and polyethylene terephthalate (PET).

One embodiment of the present invention is a composition comprising a melt processable resin and treated titanium dioxide. The composition is typically processed by injection or blow molding to form a rigid layer, package, or cover. The rigid layer, package, or cover without additional layers is referred to as the monolayer. The processing method yields a monolayer thickness of about 10 mils (254 µm), 11 mils (279.4 µm), 12 mils (304.8 µm), 13 mils (330.2 µm), 14 mils (355.6 µm), 15 mils (381 µm), 16 mils (406.4 µm), 17 mils (431.8 µm), 18 mils (457.2 µm), 19 mils (482.6 µm), 20 mils (508 µm), 21 mils (533.4 µm), 22 mils (558.8 µm), 23 mils (584.2 µm), 24 mils (609.6 µm), 25 mils (635 µm), 25 to 35 mils (635 µm to 889 µm); most preferable the thickness of the monolayer is 12 mils to 20 mils (304.8 µm to 508 µm).

Another embodiment of the present invention is a composition comprising a melt processable resin and treated titanium dioxide at titanium dioxide weight fractions of greater than 6% in the final package. In yet another embodiment, the melt processable resin used is HDPE.

In an embodiment of the present invention, the composition is used to create a blow molded plastic container or package. This package can be of one piece with relatively thin walled construction having four generally flat sidewalls interconnected by curved corner portions and having a flattened bottom portion which is interconnected to the flattened sidewalls by curved base portions. Such containers have associated with them an integral handle fabricated within the container profile and located along a curved corner portion thereof. The plastic container construction of this invention is characterized by improved light protection characteristics for a given amount of plastic material employed in the fabrication thereof, without interfering with the previously established standards of configuration for adapting the container to particular automated end use applications, such as packaging, filling and the like. This plastic container can be used to contain many products including dairy milk, teas, juices or other beverage and fluid products. The package is particularly useful for protection of light sensitive entities present in food products.

In another embodiment of the present invention, the package of the invention includes one or more aesthetic layers.

In a further embodiment of the present invention, the package produced can be recycled.

### Measuring Light protection Performance or LPF

The rate of change of one or more light sensitive entitles is referred to as the "light protection factor" or "LPF" and is unlike opacity and/or light transmittance measurements. LPF is the time required for half of a light sensitive entity concentration to undergo transformation. Hence, a material comprising one or more light sensitive entity protected by a high LPF value package can be exposed to more light before changes occur to the light sensitive entity versus the same material protected by a low LPF value package. A detailed description of measuring LPF is further described in published patent application numbers WO2013/163421 titled, "Methods for Determining Photo Protective Materials" and WO2013/162947 titled, "Devices for Determining Photo Protective Materials Additional information may be found in the example section of this patent application.

The current invention is focused on identifying new materials with light protective properties that protect species from photo chemical process (e.g., photo oxidation). Photochemical processes alter entities such as riboflavin, curcurim, myoglobin, chlorophyll (all forms), vitamin A, and erythrosine under the right conditions. Other photosensitive entities that may be used in the present invention include those found in foods, pharmaceuticals, biological materials such as proteins, enzymes, and chemical materials. In the present invention, LPF protection is reported for the light sensitive entity riboflavin. Riboflavin is the preferred entity to track performance for dairy applications although other light sensitive entities may also be protected from the effects of light.

Surprisingly, applicants discovered packaging materials capable of processing with higher treated titanium dioxide levels of about 6.0 wt.%, 6.1 wt.%, 6.2 wt.%, 6.3 wt.%, 6.4 wt.%, 6.5 wt.%, 6.6 wt.%, 6.7 wt.%, 6.8 wt.%, 6.9 wt.%, 7.0 wt.%, 7.1 wt.%, 7.2 wt.%, 7.3 wt.%, 7.4 wt.%, 7.5 wt.%, 7.6 wt.%, 7.7 wt.%, 7.8 wt.%, 7.9 wt.%, 8.0 wt.%, 8.1 wt.%, 8.2 wt.%, 8.3 wt.%, 8.4 wt.%, 8.5 wt.%, 8.6 wt.%, 8.7 wt.%, 8.8 wt.%, 8.9 wt.%, 9.0 wt.%, 9.1 wt.%, 9.2 wt.%, 9.3 wt.%, 9.4 wt.%, 9.5 wt.%, 9.6 wt.%, 9.7 wt.%, 9.8 wt.%, 9.9 wt.%, 10.0 wt.%, 10.1 wt.%, 10.2 wt.%, 10.3 wt.%, 10.4 wt.%, 10.5 wt.%, 10.6 wt.%, 10.7 wt.%, 10.8 wt.%, 10.9 wt.%, 11.0 wt.%, 11.1 wt.%, 11.2 wt.%, 11.3 wt.%, 11.4 wt.%, 11.5 wt.%, 11.6 wt.%, 11.7 wt.%, 11.8 wt.%, 11.9 wt.%, 12 wt.%, to 14 wt. % (based on the total weight of the monolayer) that have extremely high LPF values indicating the efficiency of this light protective design.

The LPF values of the packages of the present invention are greater than 25, greater than 30, greater than 35, greater than 40, greater than 45, greater than 50, greater than 55, greater than 60, greater than 65, greater than 70, greater than 75, or greater than 80.

The preferred monolayer packages of the present invention optionally include additional aesthetic layers, such as labels, brand and product information (either supplied on a label or as an ink layer directly onto the package), and wraps can be included in the package design of the present invention. The monolayer is the layer of the package responsible for the light and mechanical protection of the package.

In an aspect of the invention, the package is substantially free of color (including dyes such as yellow dye, red dye, etc.) and has a whiteness index of in the range of 80 to 100, or preferably greater than 85 WI 313 D65/10. Whiteness is defined as a measure of how closely a surface matches the properties of a perfect reflecting diffuser, i.e. an ideal reflecting surface that neither absorbs nor transmits light, but reflects it at equal intensities in all directions. For the purposes of this standard, the color of such a surface is known as preferred white. It is the measure which correlates the visual ratings of whiteness for certain white and near-white surfaces. The two most commonly used methods for computing a whiteness index are: CIE Whiteness Index and Ganz-Griesser Whiteness Index that are incorporated herein by reference.

The CIE Whiteness Index: To make the white weighting more informative, the CIE recommended in 1981 a formula that is today known as "CIE Whiteness." These indices specified by the CIE for the D65 and illuminant C in combination with either 2° or 10° observer function. However, the equation is commonly used with other illuminants; therefore the value shown will depend on the primary illuminant you have chosen (Billmeyer and Saltzman's, "Principles of Color Technology", Third Edition; Roy S. Berns; John A Wiley and Sons Publication; copyright 2000; ISBN 0-471-19459-X; pages 70-71,

### Examples

### Example 1

A Uniloy 250 R1 machine was used for production of bottles using extrusion blow molding processes. Standard practices and settings for processing HDPE rigid packaging were used with the tooling described as follows.
- Die:: MA 1002-80 plated
- Mandrel:: MA 1002-9
- Mold:: Container MA-8552

In the process, a single screw extruder with L/D ratio of 24:1 containing four sections with the following temperature settings:
- feed section: 325 °F (162.78 °C)
- transport section : 360 °F (193.33 °C)
- additive metering section 340 °F (171.11 °C)
- die block: 340 °F (171.11 °C)

The feed rate to the extruder was 4.6 (Ibs/min) of a pre-blended treated TiO₂ masterbatch, wherein the TiO₂ has an inorganic surface modification using alumina hydrous oxide, fluoride ions and an organosilicon compound according to the teachings in US Patent No. 5562990, with HDPE resin (Ineos A60-70-162 PE) at desired ratios. The parison was inflated from 120 PSIG (9.29 bar) system air with a blow pressure of 80 PSIG (6.53 bar) and pre-blow pressure of 35 PSIG (3.43 bar). The parison was captured by a Mid-America Machining MA8552 mold design using the following timing sequence:

| **Sequence step** | **In seconds** |
|---|---|
| Charge delay | 2 |
| Exhaust delay | 0.8 |
| Blow delay | 0.2 |
| Blow time | 4.0 |
| Mold close | 1.5 |
| Blow pin up delay | 0 |
| Blow pin down delay | 0 |
| Preblow delay | 1.3 |
| Clamp pause | 0 |
| Bottom air time | 1 |
| Start swing arm delay | 2.5 |
| Cycle time | 8.0 |

These conditions produced rigid one gallon (3.79 I) HDPE bottles of about 62 g to within +/- 1 g with a white masterbatch containing treated titanium dioxide and HDPE let down resin.

The ratio of the white masterbatch and HDPE resin was altered to yield the desired bottle production conditions and resultant bottles. These white masterbatch and HDPE resin mixtures were prepared by weight and thoroughly mixed before being fed to the extruder. A bottle condition with only the natural HDPE resin was produced in the same process as a control. Representative samples of the resultant bottles were characterized for light protection performance by measuring the LPF value for riboflavin on the bottles at specified locations. Specifically bottles were deconstructed to obtain a flat plaque from below the handle on the side wall of the bottles. The average LPF is reported in the below table and represents the average of multiple LPF values for replicate measurements of these plaques obtained from one defined location on each of the sampled bottles.

| Bottle Condition | Measured Treated TiO₂ Content (wt%) | Average LPF (h) |
|---|---|---|
| 1 | 6.6% | 52 |
| 2 | 9.6% | 88 |
| Control | 0 | 1 |

### Example 2

Representative bottles of the Bottle Conditions 1 and 2 described in Example 1 were further evaluated for mechanical performance by drop testing. Drop testing is a pass/fail test to determine the mechanical integrity of the blown bottle, involving dropping a liquid filled bottle from a pre-arranged height and observing if it survives the drop impact without losing its integrity as a liquid container. Drop testing was performed from a 24" height where the drop height is defined from the base of the bottle. Drop testing was conducted outdoors (∼10 C) over a dry flat concrete surface. A sleeve was used to guide the bottle straight and in a consistent fashion for drop trials. The bottle was placed into the sleeve and supported from beneath by hand before releasing the supporting hand to allow the bottle to drop.

Evaluations were performed within hours after production but after bottles had reached ambient temperature. Multiple (3 to 5) representative bottles of the desired condition were filled with tap water and capped by hand. In the evaluation, the dropped bottle passed if no failures were observed and the bottle integrity was maintained through the drop impact (i.e., no breaches in the bottle walls) and the cap remained secure on the bottle. All five drop trials for both Bottle Conditions 1 and 2 yielded passes.

Using the same production processes as in Example 1 but with a white masterbatch concentrate containing TiO₂, as described in Example 1, and CaCO3 in a 2:1 weight ratio, bottles were produced as Bottle Conditions 3, 4, and 5 to contain treated TiO₂ in addition to CaCO3 at total mineral contents of 4 to 8 wt%. All bottles were produced at a target weight of 62 g +/- 1g. Bottles were filled, capped, and dropped from 24"as described above. Bottle Conditions 3, 4, and 5 all led to drop testing failures in the drop trials. This results, reported in the below table, illustrate that the light protection design of bottle condition 1 and 2 represents a bottle with superior mechanical performance for drop even at higher mineral contents than bottle conditions 3, 4, and 5.

We believe the incorporation of CaCO₃, even at lower total mineral content levels, causes issues with mechanical performance due to the irregular shape and inconsistent particle size distribution of the CaCO3 materials that is inherent to this mineral material. This irregular shape could lead to a nucleation point (stress concentrator) for mechanical failure in the bottles. Thus, the design of Bottle Condition 1 and 2 are preferred for their superior mechanical performance.

| Bottle Condition | Targeted Total Mineral Content (wt%) | 24" Drop Pass Rate (No. Passes / No. Trials) |
|---|---|---|
| 1 | 7 wt% | 5/5 |
| 2 | 12 wt% | 5/5 |
| 3 | 4 wt% | 1/3 |
| 4 | 6 wt% | 1/3 |
| 5 | 8 wt% | 1/3 |

## Claims

1. A package for one or more light sensitive products comprising:
a) a monolayer comprising TiO₂ particles coated with a metal oxide and an organic material, and one or more melt processable resin(s), wherein the one or more melt processable resin(s) comprises at least one polyolefin and wherein the monolayer has an LPF value from 25 to 120, and the concentration of TiO₂ particles is from 6 to 14 wt.% of the monolayer; and
b) optionally one or more aesthetic layers, wherein the light protection factor (LPF) is measured as described herein in the first paragraph of the section titled "Measuring Light protection Performance or LPF".

2. The package of Claim 1 wherein the metal oxide is selected from the group consisting of silica, alumina, zirconia, or combinations thereof.

3. The package of Claim 2 wherein the metal oxide is alumina.

4. The package of Claim 1 wherein the organic material is selected from the group consisting of an organo-silane, an organo-siloxane, a fluoro-silane, an organo-phosphonate, an organo-acid phosphate, an organo-pyrophosphate, an organo-polyphosphate, an organo-metaphosphate, an organo-phosphinate, an organo-sulfonic compound, a hydrocarbon-based carboxylic acid, an associated ester of a hydrocarbon-based carboxylic acid, a derivative of a hydrocarbon-based carboxylic acid, a hydrocarbon-based amide, a low molecular weight hydrocarbon wax, a low molecular weight polyolefin, a co-polymer of a low molecular weight polyolefin, a hydrocarbon-based polyol, a derivative of a hydrocarbon-based polyol, an alkanolamine, a derivative of an alkanolamine, an organic dispersing agent, or a mixture thereof

5. The package of Claim 4 wherein the organic material is an organo-silane having the formula: R⁵ ₓSiR⁶ ₄₋ₓ wherein R⁵ is a nonhydrolyzable alkyl, cycloalkyl, aryl, or aralkyl group having at least 1 to about 20 carbon atoms; R⁶ is a hydrolyzable alkoxy, halogen, acetoxy, or hydroxy group; and x=1 to 3.

6. The package of Claim 5 wherein the organic material is octyltriethoxysilane.

7. The package of Claim 1 comprising a concentration of the TiO₂ particles of from 7 to 14 wt% of the monolayer, preferably a concentration of the TiO₂ particles of from 8 to 14 wt% of the monolayer, more preferably a concentration of the TiO₂ particles of from 9 to 14 wt% of the monolayer, most preferably a concentration of the TiO₂ particles of from 10 to 14 wt% of the monolayer.

8. The package of Claim 1 wherein the monolayer has a LPF value of 25 to 120, preferably wherein the monolayer has a LPF value of 30 to 120, more preferably wherein the monolayer has a LPF value of 40 to 120, most preferably wherein the monolayer has a LPF value of 50 to 120.

9. The package of claim 1 wherein the polyolefin is a high density polyethylene.

10. The package of Claim 1 wherein the monolayer has a thickness of 5 mil (127 µm) to 100 mil (2.54 mm).

11. The package of Claim 10 wherein the monolayer has a thickness of 10 mil (254 µm) to 40 mil (1.016 mm).

12. The package of Claim 11 wherein the monolayer has a thickness of 13 mil (330.2 µm) to 20 mil (508 µm).

13. The package of Claim 1 where the metal oxide is alumina and the organic material is Octyltriethoxysilane.

14. A package design comprising:
a. a monolayer comprising TiO₂ particles coated with a metal oxide and an organic material, and one or more melt processable resin(s), wherein the one or more of melt processable resin(s) is selected from the group of polyolefins and wherein the monolayer has an LPF value in the range of 25 to 120, and the concentration of TiO₂ particles is from 6 to 14 wt.% of the monolayer, wherein the light protection factor (LPF) is measured as described herein in the first paragraph of the section titled "Measuring Light protection Performance or LPF"; and
b. optionally one or more aesthetic layers;
wherein the monolayer is shaped to hold a volume of fluid in the range from 0.5 gallons (1.89 I) to 2 gallons (7.57 I).

## Patentansprüche

1. Verpackung für ein oder mehrere lichtempfindliche Produkte, umfassend:
a) eine Monoschicht umfassend TiO₂-Teilchen, die mit einem Metalloxid und einem organischen Material beschichtet sind, und ein oder mehrere schmelzverarbeitbaren Harze, wobei die schmelzverarbeitbaren Harze mindestens ein Polyolefin umfassen und wobei die Monoschicht einen LPF-Wert von 25 bis 120 aufweist und die Konzentration der TiO₂-Teilchen 6 bis 14 Gew.-% der Monoschicht beträgt; und
b) wahlweise eine oder mehrere ästhetische Schichten, wobei der Lichtschutzfaktor (LPF) wie hierin im ersten Absatz des Abschnitts mit dem Titel "Messen der Lichtschutzleistung oder LPF" beschrieben gemessen wird.

2. Verpackung nach Anspruch 1, wobei das Metalloxid aus der Gruppe ausgewählt ist bestehend aus Siliciumdioxid, Aluminiumoxid, Zirkoniumdioxid und Kombinationen davon.

3. Verpackung nach Anspruch 2, wobei das Metalloxid Aluminiumoxid ist.

4. Verpackung nach Anspruch 1, wobei das organische Material aus der Gruppe ausgewählt ist bestehend aus einem Organosilan, einem Organosiloxan, einem Fluorsilan, einem Organophosphonat, einem Organosäurephosphat, einem Organopyrophosphat, einem Organopolyphosphat, einem Organometaphosphat, einem Organophosphinat, einer Organosulfonverbindung, einer Carbonsäure auf Kohlenwasserstoffbasis, einem zugehörigen Ester einer Carbonsäure auf Kohlenwasserstoffbasis, einem Derivat einer Carbonsäure auf Kohlenwasserstoffbasis, einem Amid auf Kohlenwasserstoffbasis, einem niedermolekularen Kohlenwasserstoffwachs, einem niedermolekularen Polyolefin, einem Copolymer eines niedermolekularen Polyolefins, einem Polyol auf Kohlenwasserstoffbasis, einem Derivat eines Polyols auf Kohlenwasserstoffbasis, einem Alkanolamin, einem Derivat eines Alkanolamins, einem organischen Dispergierhilfsmittel oder einer Mischung davon.

5. Verpackung nach Anspruch 4, wobei das organische Material ein Organosilan ist, das die Formel: R⁵ₓSiR⁶₄₋ₓ aufweist, wobei R⁵ eine nichthydrolysierbare Alkyl-, Cycloalkyl-, Aryl- oder Aralkylgruppe ist, die mindestens 1 bis etwa 20 Kohlenstoffatome aufweist; R⁶ eine hydrolysierbare Alkoxy-, Halogen-, Acetoxy- oder Hydroxygruppe ist; und x=1 bis 3 beträgt.

6. Verpackung nach Anspruch 5, wobei das organische Material Octyltriethoxysilan ist.

7. Verpackung nach Anspruch 1, umfassend eine Konzentration der TiO₂-Teilchen von 7 bis 14 Gew.-% der Monoschicht, bevorzugt eine Konzentration der TiO₂-Teilchen von 8 bis 14 Gew.-% der Monoschicht, noch bevorzugter eine Konzentration der TiO₂-Teilchen von 9 bis 14 Gew.-% der Monoschicht, am bevorzugtesten eine Konzentration der TiO₂-Teilchen von 10 bis 14 Gew.-% der Monoschicht.

8. Verpackung nach Anspruch 1, wobei die Monoschicht einen LPF-Wert von 25 bis 120 aufweist, wobei die Monoschicht bevorzugt einen LPF-Wert von 30 bis 120 aufweist, wobei die Monoschicht noch bevorzugter einen LPF-Wert von 40 bis 120 aufweist, wobei die Monoschicht am bevorzugtesten einen LPF-Wert von 50 bis 120 aufweist.

9. Verpackung nach Anspruch 1, wobei das Polyolefin ein Polyethylen hoher Dichte ist.

10. Verpackung nach Anspruch 1, wobei die Monoschicht eine Dicke von 5 mil (127 µm) bis 100 mil (2,54 mm) aufweist.

11. Verpackung nach Anspruch 10, wobei die Monoschicht eine Dicke von 10 mil (254 µm) bis 40 mil (1,016 mm) aufweist.

12. Verpackung nach Anspruch 11, wobei die Monoschicht eine Dicke von 13 mil (330,2 µm) bis 20 mil (508 µm) aufweist.

13. Verpackung nach Anspruch 1, wobei das Metalloxid Aluminiumoxid ist und das organische Material Octyltriethoxysilan ist.

14. Verpackungsdesign umfassend:
a. eine Monoschicht umfassend TiO₂-Teilchen, die mit einem Metalloxid und einem organischen Material beschichtet sind, und ein oder mehrere schmelzverarbeitbaren Harze, wobei das eine oder die mehreren schmelzverarbeitbaren Harze aus der Gruppe von Polyolefinen ausgewählt sind und wobei die Monoschicht einen LPF-Wert im Bereich von 25 bis 120 aufweist und die Konzentration der TiO₂-Teilchen 6 bis 14 Gew.-% der Monoschicht beträgt, wobei der Lichtschutzfaktor (LPF) wie hierin im ersten Absatz des Abschnitts mit dem Titel "Messen der Lichtschutzleistung oder LPF" beschrieben gemessen wird; und
b. wahlweise eine oder mehrere ästhetische Schichten;
wobei die Monoschicht zum Halten eines Fluidvolumens im Bereich von 0,5 Gallonen (1,891) bis 2 Gallonen (7,571) gestaltet ist.

## Revendications

1. Emballage d'un ou plusieurs produits sensibles à la lumière comprenant:
a) une monocouche comprenant des particules de TiO₂ revêtues d'un oxyde métallique et d'un matériau organique, et une ou plusieurs résines pouvant être transformées à l'état fondu, lesdites résines pouvant être transformées à l'état fondu comprenant au moins une polyoléfine et la monocouche ayant une valeur LPF de 25 à 120, et la concentration des particules de TiO₂ étant de 6 à 14 % en pds de la monocouche; et
b) facultativement une ou plusieurs couches esthétiques, le facteur de protection contre la lumière (LPF) étant mesuré tel que décrit ci-inclus dans le premier paragraphe de la section intitulée « Mesure de la performance de protection contre la lumière ou LPF ».

2. Emballage selon la revendication 1, l'oxyde métallique étant sélectionné dans le groupe constitué de la silice, de l'alumine, du zircone, et de leurs combinaisons.

3. Emballage selon la revendication 2, l'oxyde métallique étant l'alumine.

4. Emballage selon la revendication 1, le matériau organique étant sélectionné dans le groupe constitué d'un organo-silane, d'un organo-siloxane, d'un fluoro-silane, d'un organo-phosphonate, d'un organo-phosphate d'acide, d'un organo-pyrophosphate, d'un organo-polyphosphate, d'un organo-métaphosphate, d'un organo-phosphinate, d'un composé organo-sulfonique, d'un acide carboxylique à base de composé hydrocarboné, d'un ester associé d'un acide carboxylique à base de composé hydrocarboné, d'un dérivé d'un acide carboxylique à base de composé hydrocarboné, d'un amide à base de composé hydrocarboné, d'une cire hydrocarbonée de bas poids moléculaire, d'une polyoléfine de bas poids moléculaire, d'un co-polymère d'une polyoléfine de bas poids moléculaire, d'un polyol à base de composé hydrocarboné, d'un dérivé d'un polyol à base de composé hydrocarboné, d'une alcanolamine, d'un dérivé d'une alcanolamine, d'un agent de dispersion organique, ou d'un mélange de ceux-ci.

5. Emballage selon la revendication 4, le matériau organique étant un organo-silane ayant la formule: R⁵ₓSiR⁶₄₋ₓ dans lequel R⁵ est un groupe alkyle, cycloalkyle, aryle, ou aralkyle non hydrolysable ayant au moins 1 à environ 20 atomes de carbone; R⁶ est un groupe alcoxy, halogéno, acétoxy, ou hydroxy hydrolysable; et x=1 à 3.

6. Emballage selon la revendication 5, le matériau organique étant l'octyltriéthoxysilane.

7. Emballage selon la revendication 1 comprenant une concentration des particules de TiO₂ de 7 à 14 % en pds de la monocouche, préférablement une concentration des particules de TiO₂ de 8 à 14 % en pds de la monocouche, plus préférablement une concentration des particules de TiO₂ de 9 à 14 % en pds de la monocouche, de manière préférée entre toutes une concentration des particules de TiO₂ de 10 à 14 % en pds de la monocouche.

8. Emballage selon la revendication 1, la monocouche ayant une valeur LPF de 25 à 120, préférablement la monocouche ayant une valeur LPF de 30 à 120, plus préférablement la monocouche ayant une valeur LPF de 40 à 120, de manière préférée entre toutes la monocouche ayant une valeur LPF de 50 à 120.

9. Emballage selon la revendication 1, la polyoléfine étant un polyéthylène haute densité.

10. Emballage selon la revendication 1, la monocouche ayant une épaisseur de 5 mils (127 µm) à 100 mils (2,54 mm).

11. Emballage selon la revendication 10, la monocouche ayant une épaisseur de 10 mils (254 µm) à 40 mils (1,016 mm).

12. Emballage selon la revendication 11, la monocouche ayant une épaisseur de 13 mils (330,2 µm) à 20 mils (508 µm).

13. Emballage selon la revendication 1 dans lequel l'oxyde métallique est l'alumine et le matériau organique est l'octyltriéthoxysilane.

14. Modèle d'emballage comprenant:
a. une monocouche comprenant des particules de TiO₂ revêtues d'un oxyde métallique et d'un matériau organique, et une ou plusieurs résines pouvant être transformées à l'état fondu, ladite ou lesdites résines pouvant être transformées à l'état fondu étant sélectionnées dans le groupe des polyoléfines et, la monocouche ayant une valeur LPF située dans la plage de 25 à 120, et la concentration des particules de TiO₂ étant de 6 à 14 % en pds de la monocouche, le facteur de protection contre la lumière (LPF) étant mesuré tel que décrit ci-inclus dans le premier paragraphe de la section intitulée « Mesure de la performance de protection contre la lumière ou LPF »; et
b. facultativement une ou plusieurs couches esthétiques;
la monocouche étant profilée pour contenir un volume de liquide dans la plage de 0,5 gallon (1,89 L) à 2 gallons (7,57 L).
